# EUROPEAN PATENT SPECIFICATION

(11) **EP 2 905 514 B1**
(45) Date of publication and mention of the grant of the patent: **06.06.2018**
(21) Application number: 15000252.5
(22) Date of filing: 28.01.2015
(51) Int. Cl.: F16J 15/06, F16J 15/10, F16B 5/02, E04F 11/18

(54) **APPARATUS COMPRISING A MEANS INTENDED TO BE FIXED TO A BUILDING ELEMENT**
VORRICHTUNG MIT MITTELN ZUR BEFESTIGUNG AN EIN BAUELEMENT
APPAREIL COMPRENANT UN MOYEN DESTINÉ À ÊTRE FIXÉ À UN ÉLÉMENT DE CONSTRUCTION

(30) Priority: 11.02.2014 IT AN20140020
(43) Date of publication of application: 12.08.2015
(73) Proprietor: Faraone S.R.L., 64018 C.da Salinello Tortoreto (TE) (IT)
(72) Inventor: Faraone, Sabatino, 64018 C.da Salinello - Tortoreto (TE) (IT)
(74) Representative: Premru, Rok

(56) References cited:
- WO-A1-2013/084703
- CN-U- 201 891 170
- FR-A1- 2 957 955
- GB-A- 929 176
- GB-A- 2 289 926
- JP-A- 2000 234 415
- JP-U- H0 423 848
- US-A- 4 310 273

## Description

The object of the present invention is an apparatus for connecting means to walls, in particular external, of building elements.

Said means, in turn, being able to be part of (or anchoring means for) protection and/or delimitation and/or furnishing structures, such as, by way of a non-limiting example, parapets, railings, balustrades, fences, partition walls and the like.

More in particular, the object of the present invention is an innovative improvement of the systems for fixing and anchoring a profile, adapted to retain panels, also glazed, of different thicknesses on a building component for installation.

The invention therefore falls within the building field.

Of course, nothing prevents the application of the finding to be extended also to fields different from the building one even if a particular utility is recognizable in apparatuses for the installation of glazed panels.

It is known that for the installation of glazed panels on supporting building structures and or surfaces to be delimited or that need protection metal profiles are used, preferably of aluminium, which can be anchored to the building component and adapted to serve as a base for said glazed panels, retaining them in a substantially vertical set-up.

The fixing of the profile to the building component may be obtained by screws and expansion plugs (or equivalent means and systems) which engage on prearranged holes.

As an example, document JP H04 23848 describes an apparatus comprising a base and a threaded screw, said base being fixable to a building element through said threaded screw

Document US 4 310 273 describes a fastener assembly comprising a threaded screw and a flexible seal with a through-hole and a collar.

These known methods and fixing systems, despite being widely widespread and having long been used, are not free from drawbacks.

For example, infiltrations of water (e.g., rainwater or resulting from other atmospheric phenomena) through said holes of the building component may deteriorate and compromise irreparably its structural and functional properties as well as the physical characteristics of the materials used and the stability of the coupling made with the overlying glazed panellings.

Such problem is recurring when fixing any means to a building structure.

The object of the present invention is to eliminate at least in part the above listed drawbacks of the prior art, by designing an innovative system for the fixing and anchoring of an element on a building component which does not compromise the structural, functional and aesthetic properties thereof but which prevents, at least in part, infiltrations of water in the same building component.

A specific object of the present invention is to eliminate the above drawbacks and to introduce the above advantages in case such element is a profile adapted to retain panellings.

These and other objects are achieved by the invention, with the features listed in the annexed independent claim 1.

Further features of the present invention shall be better highlighted by the following description of a preferred embodiment, in accordance with the patent claims and illustrated in the annexed drawing tables. Such figures should be considered as having an illustrative and non-limiting purpose, wherein:
- Fig. 1 shows a cutaway view of an apparatus for the fixing of panellings on a building component.
- Fig. 2 shows a detail of Fig. 1.

The features of the invention shall now be described, using the references contained in the annexed figures. It should be noted that any dimensional and spatial term (such as "lower", "upper", "right", "left" and the like) refers, unless otherwise indicated, to the position according to which the object of the invention is shown in the drawings.

With the purpose of highlighting some features instead of others, not necessarily what described in the annexed drawings is perfectly scaled.

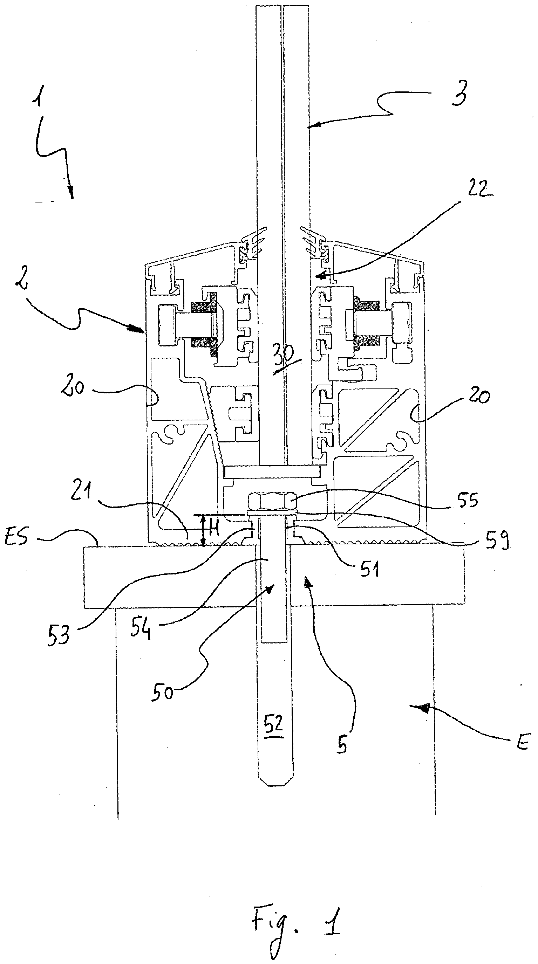

In Fig. 1, reference numeral 1 denotes, as a whole, an apparatus which, in the example of the figure, is aimed at the connection of a panelling 3 to a building element E (e.g., a useable floor, a flooring, a masonry work, a wall or the like) by a means 2 consisting of a profile.

Said panelling 3 may be a glass plate, although all that shall be said in the description may be extended to any other type of panelling suitable to define technical structures for protection, delimitation and/or furnishing, such as balustrades, parapets, railings, enclosing elements, partition walls and the like.

More generally, said apparatus 1 comprises a means 2 intended to be constrained to a building element E through screws or equivalent for any purpose, and only in preferred cases such a means 2 is a profile, generally in aluminium (or alloys thereof), which, even more in particular, is suitably shaped to retain and lock said panelling 3. The multiple and various systems usable for retaining a panelling 3 on a means 2 consisting of a profile shall not be discussed herein any further, as this is not the specific object of the invention but only a case in which the application of the invention may be particularly useful and frequent.

Therefore, all that will be said in the description should not be considered as limited to only the type of means 2 shown in Fig. 1 in the form of a profile, such representation having only the purpose of showing that the invention is also applicable to the case particularly useful where the means 2 is a profile intended to fasten a panelling 3 to a building element E.

Through the base 21 of the means 2, by special fastening means 5, the connection and anchoring of the same means 2 to the building element E is established.

More precisely, as shown in Fig. 1, the fixing means 5 comprise at least a threaded screw 50 intended to:
- be inserted in a through hole 51 of the base 21 of the same means 2, and
- be tightened inside a corresponding hole 52 previously obtained on the building element E (prearranged, for example, with expansion plugs or similar means, only schematically shown in the annexed Figs.).

During the tightening, the head 55 of said threaded screw 50 is capable of pressing on the means 2 up to bringing the bottom 210 thereof to press against the surface ES of the building element E for installation; this is sufficient to ensure a permanent and firm anchoring of means 2 to said building element E.

More precisely, the head 55 of said at least one threaded screw 50 presses on the upper face 211 of the base 21 of the means 2, preferably through the interposition of a washer 59 and, optionally, according to some variants of the invention, of a collar of a seal 53 provided by the invention and described below. Such seal 53 which is an essential part of the apparatus 1 according to the invention, is made of elastic material and may be inserted without clearance and preferably with slight interference inside the through hole 51 of said base 21.

The seal 53 is in turn provided with a through hole which is crossed by the stem 54 of the screw 50 once the means 2 is anchored to said building element E.

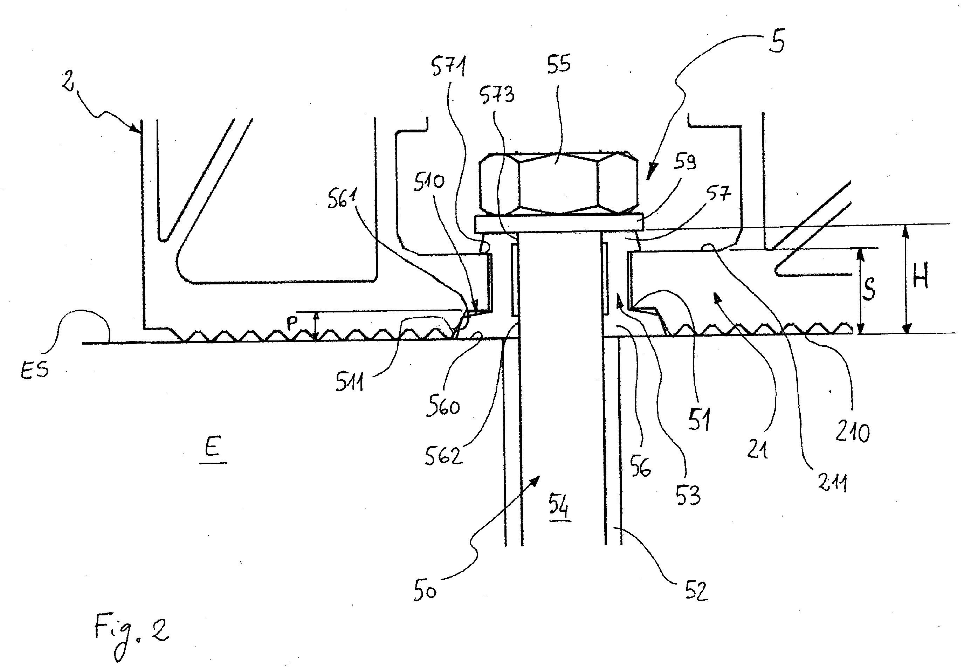

As shown in the detail of Fig. 2, the seal 53 provides, at the bottom, i.e. towards the outside of the means 2, a first collar 56 the outer face 560 whereof has an outer diameter greater than both that of the through hole 51 and that of the hole 52 obtained on the building element E.

The seal 53, in operating conditions, is inserted in the through hole 51 from the bottom 210 up to the stop of the first collar 56 against the same bottom 210. When the means 2 is tightened to the building element E, the outer face 560 of the first collar 56 is pressed against the surface ES of the building element E all around the hole 52 thus preventing water that may have infiltrated between the bottom 210 and the face of the building element E from entering and due, for example, to rain. At least in order to hide this first collar 56 from sight, when the means 2 is anchored to the building element, the first collar 56 is partially seated inside a seat 510 of depth P obtained in the bottom 210, the first collar 56 having a thickness sufficiently greater than the depth P so as to able to undergo an elastic deformation sufficient to seal the hole 52 when the tightening of the means 2 against the surface ES occurs (in the figures the first collar 56 is shown completely seated inside the seat 510 because drawn as flat in operating conditions).

Preferably, when such seat 510 is provided, the first collar 56 has:
- a conical side surface 561, with taper the diameter whereof reduces from the outer face 560 inwards, intended to wedge couple with the wall 511 of said seat 510 which, in turn, may be flared;
- an inner wall 562 of inner diameter substantially equal or slightly smaller than that of the stem 54 of the tightening screw 50.

In such conditions, when the means 2 is tightened to the building element E, the inner wall 562, by the effect of said conical side surface 561 and the optionally flared wall 511, is pushed radially to press against the stem 54 of the tightening screw 50 ensuring a further sealing of the hole 52 that prevents infiltrations of water coming from the inside of the means 2.

The said optional flaring of the wall 511 contributes to the said radial thrust, improving the sealing.

According to a preferred embodiment of the invention (see Fig. 2), the seal 53 may have a height H greater than the thickness S of the base 21 of the means 2.

In such case, the upper end of the seal 53 ends with a second collar 57, having thickness H - S projecting towards the upper face 211 of the base 21 whereon is capable of resting, with its shoulder 571. Preferably, also such second collar 57 has a conical outer wall with cone diameter increasing downwards so as to serve as a guiding slot for the easy insertion of the seal 53 in the through hole 51 where it remains locked due to the shoulder 571.

Once the tightening has been made, the second collar 57, tightened from the head 55 (or equivalent nut) of said threaded screw 50 on the upper face 211 of the base 21, also serves as an additional sealing means of the through hole 51.

Also the inner face 573 of the second collar 57 may have a diameter substantially equal to or slightly smaller than that of the stem 54 of the tightening screw 50 so that, by the effect of tightening, which also produces radial deformations of the second collar 57, it can press against the stem 54 of the screw 50 providing a further sealing which helps to eliminate the risk of infiltrations of water towards the underlying building element E.

The said radial deformations of the inner walls 562 and 573 of said first and second collar 56 and 57 are particularly useful if such walls 562 and 573 come into contact with the stem 54 in a zone where it is threaded, in which situation diameters of said inner walls 562 and 573 slightly smaller than that of the stem 54 would not be sufficient to ensure the sealing.

The preferred variants, which include the just described second collar 57, allow to provide the means 2 with the seal 53 already inserted into the through hole 51 of its base 21 because the second collar 57 prevents the accidental escape of the seal 53 from the through hole 51.

The apparatus 1 of the invention allows to fully achieve the intended objects and allows numerous application possibilities on building components of various types and use.

In particular, the use of the above seal 53 against infiltrations of water in the building element E allows to preserve its structural, functional and aesthetic properties as well as the physical characteristics of the materials used and the stability of the coupling made with the optional glazed panellings mentioned above.

It is clear that in the practical embodiment of the invention numerous modifications and further variants may be provided within the scope of the appended claims.

## Claims

1. Apparatus (1) comprising:
- a means (2) fixable to a building element (E), said means (2) comprising a base (21) having at least a through hole (51) for a fixing threaded screw (50)
- a seal (53) of flexible material insertable without clearance or with slight interference inside said through hole (51) of said base (21) from its bottom part (210), said seal (53) providing for:
- a through hole for the stem (54) of said screw (50)
- and a first collar (56) the outer face (560) whereof has an outer diameter greater than said through hole (51) of said base (21); wherein said first collar (56) is partly seated inside a seat (510) obtained in said bottom part (210) and has a thickness greater than the depth P of said seat (510).

2. Apparatus (1), according to the previous claim,
**characterised in that**
said first collar (56) has:
- a conical side surface (561), with taper the diameter whereof reduces from said outer face (560) inwards, and of sufficient dimensions to wedge couple with the wall (511) of said seat (510),
- an inner wall (562) with inner diameter substantially equal or slightly smaller than that of said stem (54),
said taper and coupling being sufficient to press said inner wall (562) against said stem (54) when said tightening takes place.

3. Apparatus (1), according to the previous claim,
**characterised in that** said seat (510) has a flared shape.

4. Apparatus (1), according to any previous claim,
**characterised in that**
said seal (53) has:
- a height H greater than the thickness S of said base (21)
- and a second collar (57) with a thickness H-S projecting towards said upper face (211) of said base (21) and whereon it is capable of resting with its shoulder (571).

5. Apparatus (1), according to the previous claim,
**characterised in that**
said second collar (57) has a conical outer wall with the cone diameter increasing downwards enough to act as a guiding slot for the easy insertion of said seal (53) in said through hole (51).

6. Apparatus (1), according to the previous claims from 5 onwards,
**characterised in that**
said second collar (57) has an inner face (573) with diameter substantially equal or slightly smaller than that of said stem (54).

7. Apparatus (1), according to any previous claim,
**characterised in that**
said means (2) consists of a profile (2).

8. Apparatus (1), according to any previous claim,
**characterised in that**
it is aimed at connecting a panelling (3) to a building element E.

## Patentansprüche

1. Vorrichtung (1), umfassend:
- ein Mittel (2), das an einem Gebäudeelement (E) befestigbar ist, wobei das Mittel (2) eine Basis (21) aufweist, die mindestens ein Durchgangsloch (51) für eine Gewindebefestigungsschraube (50) aufweist,
- eine Dichtung (53) aus flexiblem Material, die ohne Spiel oder mit geringfügiger Interferenz in das Durchgangsloch (51) der Basis (21) von ihrem unteren Teil (210) einfügbar ist, wobei die Dichtung (53) aufweist:
- ein Durchgangsloch für den Schaft (54) der Schraube (50)
- und einen ersten Kragen (56), dessen Außenseite (560) einen Außendurchmesser aufweist, der größer als das Durchgangsloch (51) der Basis (21) ist,
wobei
der erste Kragen (56) teilweise in einem Sitz (510) angeordnet ist, der in dem unteren Teil (210) erhalten ist, und eine Dicke aufweist, die größer als die Tiefe P des Sitzes (510) ist.

2. Vorrichtung (1) nach dem vorhergehenden Anspruch,
**dadurch gekennzeichnet, dass**
der erste Kragen (56) aufweist:
- eine konische Seitenfläche (561) mit einer Verjüngung, deren Durchmesser sich von der Außenseite (560) nach innen verringert, und die ausreichend dimensioniert ist, um sich durch Verkeilung mit der Wand (511) des Sitzes (510) zu verbinden,
- eine Innenwand (562) mit einem Innendurchmesser, der im Wesentlichen gleich oder etwas kleiner als jener des Schaftes (54) ist,
wobei die Verjüngung und die Verbindung ausreichend sind, um die Innenwand (562) gegen den Schaft (54) zu drücken, wenn das Festziehen stattfindet.

3. Vorrichtung (1) nach dem vorhergehenden Anspruch,
**dadurch gekennzeichnet, dass** der Sitz (510) eine aufgeweitete Form aufweist.

4. Vorrichtung (1) nach einem der vorhergehenden Ansprüche,
**dadurch gekennzeichnet, dass**
der Sitz (53) aufweist:
- eine Höhe H, die größer als die Dicke S der Basis (21) ist,
- und einen zweiten Kragen (57) mit einer Dicke H-S, der zu der Oberseite (211) der Basis (21) vorsteht und auf der er mit seiner Schulter (571) aufliegen kann.

5. Vorrichtung (1) nach dem vorhergehenden Anspruch,
**dadurch gekennzeichnet, dass**
der zweite Kragen (57) eine konische Außenwand aufweist, wobei der Konusdurchmesser nach unten ausreichend zunimmt, um als ein Führungsschlitz für das leichte Einführen der Dichtung (53) in das Durchgangsloch (51) zu fungieren.

6. Vorrichtung (1) nach den vorhergehenden Ansprüchen ab Anspruch 5,
**dadurch gekennzeichnet, dass**
der zweite Kragen (57) eine Innenseite (573) mit einem Durchmesser aufweist, der im Wesentlichen gleich oder etwas kleiner als jener des Schaftes (54) ist.

7. Vorrichtung (1) nach einem der vorhergehenden Ansprüche,
**dadurch gekennzeichnet, dass**
das Mittel (2) aus einem Profil (2) besteht.

8. Vorrichtung (1) nach einem der vorhergehenden Ansprüche,
**dadurch gekennzeichnet, dass**
sie dazu bestimmt ist, eine Verkleidung (3) mit einem Gebäudeelement E zu verbinden.

## Revendications

1. Appareil (1) comprenant :
- un moyen (2) pouvant être fixé à un élément de construction (E), ledit moyen (2) comprenant une base (21) ayant au moins un trou traversant (51) pour une vis de fixation filetée (50)
- un joint (53) en matériau souple insérable sans jeu ou avec une légère interférence à l'intérieur dudit trou traversant (51) de ladite base (21) à partir de sa partie inférieure (210), ledit joint (53) assurant :
- un trou traversant pour la tige (54) de ladite vis (50)
- et un premier collier (56) dont la face externe (560) a un diamètre extérieur supérieur audit trou traversant (51) de ladite base (21);
où
ledit premier collier (56) est en partie logé à l'intérieur d'un siège (510) obtenu dans ladite partie inférieure (210) et a une épaisseur supérieure à la profondeur P dudit siège (510).

2. Appareil (1), selon la revendication précédente,
**caractérisé en ce que**
ledit premier collier (56) a :
- une surface latérale conique (561), dont le diamètre diminue progressivement depuis ladite face externe (560) vers l'intérieur, et de dimensions suffisantes pour se coincer avec la paroi (511) dudit siège (510),
- une paroi interne (562) de diamètre intérieur sensiblement égal ou légèrement inférieur à celui de ladite tige (54),
ladite conicité et ledit couplage étant suffisants pour presser ladite paroi interne (562) contre ladite tige (54) lorsque ledit serrage a lieu.

3. Appareil (1), selon la revendication précédente,
**caractérisé en ce que** ledit siège (510) a une forme évasée.

4. Appareil (1), selon l'une quelconque des revendications précédentes,
**caractérisé en ce que**
ledit joint (53) a :
- une hauteur H supérieure à l'épaisseur S de ladite base (21)
- et un second collier (57) d'une épaisseur H-S faisant saillie vers ladite face supérieure (211) de ladite base (21) et sur laquelle elle est susceptible de reposer avec son épaulement (571).

5. Appareil (1), selon la revendication précédente,
**caractérisé en ce que**
ledit second collier (57) a une paroi externe conique dont le diamètre du cône augmente suffisamment vers le bas pour servir de rainure de guidage pour l'insertion facile dudit joint (53) dans ledit trou traversant (51).

6. Appareil (1), selon les revendications précédentes à partir de 5,
**caractérisé en ce que**
ledit second collier (57) a une face interne (573) de diamètre sensiblement égal ou légèrement plus petit que celui de ladite tige (54).

7. Appareil (1), selon l'une quelconque des revendications précédentes,
**caractérisé en ce que**
lesdits moyens (2) consistent en un profilé (2).

8. Appareil (1), selon l'une quelconque des revendications précédentes,
**caractérisé en ce que**
il est destiné à relier un panneau (3) à un élément de construction E.
